# EUROPEAN PATENT APPLICATION

(11) **EP 2 309 825 A1**
(43) Date of publication of application: **13.04.2011**
(21) Application number: 09804924.0
(22) Date of filing: 31.07.2009
(51) Int. Cl.: H05B 37/02, G02F 1/133, G02F 1/13357

(54) **BACKLIGHT AND DISPLAY DEVICE USING THE SAME**

(30) Priority: 08.08.2008 JP 2008206087
(71) Applicant: Sharp Kabushiki Kaisha, Osaka-shi, Osaka 545-8522 (JP)
(72) Inventor: TAKEDA, Daisuke, Osaka 545-8522 (JP)
(74) Representative: Goddar, Heinz J.
(86) International application number: PCT/JP2009/063667
(87) International publication number: WO 2010/016440

(57) **Abstract**

A backlight is provided that can prevent light emitting elements and other circuit components from undergoing degradation due to temperature elevation during backlight operation. A display device utilizing the backlight is also provided. The backlight (8) is a backlight that is provided on the rear side of a display unit (2) and projects illumination used for displaying images onto the display unit (2), said backlight comprising: multiple light emitting elements (9) arranged in a single plane; a light source driving circuit (27) having a light source control unit (28) that defines the value of the drive power applied to each light emitting element (9) and a light source driver unit (29) that applies drive power corresponding to the value defined by the light source control unit (28) to the light emitting elements (9); and temperature sensors (31) that detect the ambient temperature of the regions where the light emitting elements that attain the highest temperatures during operation are disposed, wherein the light source control unit (28) reduces the drive power applied to the light emitting elements (9) that attain the highest temperatures during operation when the output values of the temperature sensors (31) exceed a predetermined threshold value.

## Description

### Technical Field

The present invention relates to a backlight that emits illumination used for displaying images on a display unit, as well as to a display device that utilizes such a backlight, and, in particular, it relates to a backlight and a display device that can prevent light emitting elements, i.e. the light sources, as well as other circuit components, from undergoing degradation due to an increase in temperature during operation.

### Background Art

In recent years, liquid crystal display devices, which feature low power consumption, thin profile, light weight, and other advantages, have been widely used in television receivers and other display devices. The liquid crystal panels used in the display units of liquid crystal display devices are non-emitting display elements, in other words, they do not emit light by themselves. Accordingly, liquid crystal display devices are typically provided with an illumination device called a backlight, which is disposed on the rear face of the liquid crystal panel. Images are displayed using light projected from the backlight.

Depending on how the light sources are disposed relative to the liquid crystal panel, illumination devices used as backlights are broadly divided into "direct-lit" and "side-lit" (also referred to as "edge-lit") backlights. In direct-lit backlights, the light sources are disposed on the rear side of the liquid crystal panel so as to project light towards the liquid crystal panel. In addition, they are adapted to emit a uniform planar light flux across the entire rear face of the liquid crystal panel by placing a diffuser plate, a prismatic sheet, or another optical sheet between the light sources and the liquid crystal panel. Such direct-lit backlights are suitable for use in large-screen liquid crystal display devices, such as the ones used in television receivers and the like. Additionally, in recent years, light emitting diodes (LEDs: Light Emitting Diodes) have attracted interest and have come into increasingly frequent use due to their higher color reproducibility and drive circuits that can be made simpler in comparison with the cold cathode fluorescent tubes (CCFTs: Cold Cathode Fluorescent Tubes) heretofore used as the light sources in direct-lit backlights.

A direct-lit backlight utilizing light emitting diodes as light sources has an array of multiple light emitting diodes formed in a single plane. However, due to the fact that light emitting diodes have the property of emitting heat when driven, the temperature of the backlight as a whole increases when the backlight is operated. In addition, the light emitting diodes, which are current-driven elements, possess an intensity versus temperature characteristic, in accordance with which their luminous intensity decreases if the temperature of the elements becomes elevated when they are driven by applying the same current value.

To prevent non-uniformities in the intensity and color of the illumination emitted from the backlight under changing ambient temperature conditions as a result of this intensity versus temperature characteristic of the light emitting diodes, it has been suggested to measure the temperature of the backlight and the intensity of the illumination emitted from the backlight and control the peak value of the drive current fed into the light emitting diodes, i.e. the light sources, and the duty (Duty) value, i.e. the proportion of the "light-on" time, during which the light emitting diodes are lit, which is used in PWM (Pulse Width Modulation) control (see Patent document 1).

In the backlight device according to Patent document 1, a single lighting unit is formed by serially connecting multiple light emitting diodes disposed so as to be located in the same temperature region, and the drive current applied to the light emitting diodes that constitute the lighting unit is adjusted by detecting the temperature of each lighting unit.

### Prior Art Documents

### Patent Documents

Patent Document 1: JP 2006-31977A

### Disclosure of Invention

### Problem to be Solved by the Invention

In the above-described conventional backlight, only heat emissions from the light emitting diodes are taken into consideration as heat-generating sources that increase the temperature of the backlight. A single lighting unit is formed by positioning multiple light emitting diodes disposed in the horizontal direction of the screen that are considered to be in the same temperature region, and intensity control is performed individually for each lighting unit.

However, in actual display devices, the light emitting diodes, i.e. the light emitting elements, are not the only heat-generating sources present in backlights. The amount of heat emitted from the various drive circuits disposed on the rear face of the backlight, including the light source-driving circuit of the backlight, is a considerable value that cannot be ignored. In addition, the distribution of temperature inside the rear cover of a display device including a backlight depends on the clearance between the backlight and the rear cover, as well as on the position of the vents provided in the rear cover.

Furthermore, in the above-described prior art, no countermeasures were provided to prevent the light emitting diodes, i.e. the light emitting elements, as well as other circuit components, from undergoing degradation under the action of heat when the temperature of the backlight inside the rear cover became excessively high.

The present invention is designed to address such prior-art problems and it is an object of the invention to provide a backlight that can prevent the light emitting elements and other circuit components from undergoing degradation due to temperature elevation during backlight operation, as well as a display device utilizing such a backlight.

### Means for Solving Problem

To attain the above-mentioned object, a first backlight according to the present invention is a backlight that is provided on the rear side of a display unit and projects illumination used for displaying images onto the display unit, said backlight comprising: multiple light emitting elements arranged in a single plane; a light source driving circuit having a light source control unit that defines the value of the drive power applied to each light emitting element and a light source driver unit that applies drive power corresponding to the value defined by the light source control unit to the light emitting elements; and temperature sensors that detect the temperature of the regions where the light emitting elements that attain the highest temperatures during operation are disposed, wherein the light source control unit reduces the drive power applied to the light emitting elements that attain the highest temperatures during operation when the output values of the temperature sensors exceed a predetermined threshold value.

In addition, a second backlight according to the present invention is a backlight that is provided on the rear side of a display unit and projects illumination used for displaying images onto the display unit, said backlight comprising: multiple light emitting elements arranged in a single plane; a light source driving circuit having a light source control unit that defines the value of the drive power applied to each light emitting element and a light source driver unit that applies drive power corresponding to the value defined by the light source control unit to the light emitting elements; and temperature sensors that detect the temperature of multiple locations in the regions where the light emitting elements are disposed, wherein the light source control unit uniformly reduces the drive power applied to all the light emitting elements in accordance with the number of the temperature sensors measuring temperatures that exceed a predetermined temperature threshold value.

The inventive display device is a display device comprising a display unit, wherein light from a backlight according to the present invention is projected onto the display unit.

### Effects of the Invention

In accordance with the present invention, it is possible to obtain a backlight, as well as a display device, that can be expected to operate in a stable manner because circuit components, including light emitting elements, are prevented from undergoing temperature-induced degradation.

### Brief Description of Drawings

[FIG.1] Fig. 1 is an exploded perspective view of a liquid crystal display device according to an embodiment of the present invention.
[FIG. 2] Fig. 2 is a diagram illustrating the cross-sectional structure of a liquid crystal display device according to an embodiment of the present invention.
[FIG. 3] Fig. 3 is a block diagram schematically illustrating the image display-related circuit configuration of a liquid crystal display device according to an embodiment of the present invention.
[FIG. 4] FIG. 4 is a plan view illustrating an example of placement of circuit boards on the rear face of a backlight chassis in a liquid crystal display device according to a first embodiment of the present invention.
[FIG. 5] FIG. 5 is a plan view illustrating how temperature increases in the backlight chassis of a liquid crystal display device according to the first embodiment of the present invention.
[FIG. 6] FIG. 6 is a plan view illustrating the reduction of the drive power applied to light emitting elements in the backlight of a liquid crystal display device according to the first embodiment of the present invention. FIG. 6 (a) illustrates the arrangement of the light emitting diodes on the chassis, FIG. 6 (b) illustrates the placement locations of the temperature sensors, and FIG. 6 (c) illustrates the reduction of the drive power applied to each light emitting diode.
[FIG. 7] FIG. 7 is a flow chart illustrating the process flow involved in reducing drive power applied to light emitting elements in the backlight of a liquid crystal display device according to the first embodiment of the present invention.
[FIG. 8] FIG. 8 is a plan view illustrating how circuit boards are disposed on the rear face of a backlight chassis in a second example of the liquid crystal display device according to the first embodiment of the present invention.
[FIG. 9] FIG. 9 is a plan view illustrating how temperature increases in the backlight chassis in the second example of the liquid crystal display device according to the first embodiment of the present invention.
[FIG. 10] FIG. 10 is a plan view illustrating the reduction of the drive power applied to light emitting elements in the backlight in the second example of the liquid crystal display device according to the first embodiment of the present invention. FIG. 10 (a) illustrates the arrangement of the light emitting diodes on the chassis, FIG. 10 (b) illustrates the placement locations of the temperature sensors, and FIG. 10 (c) illustrates the reduction of the drive power applied to each light emitting diode.
[FIG. 11] FIG. 11 is a flow chart illustrating the process flow involved in reducing drive power applied to light emitting diodes in a liquid crystal display device according to a second embodiment of the present invention.
[FIG. 12] FIG. 12 is a diagram illustrating the degree of reduction in the drive power applied to the light emitting diodes in the liquid crystal display device according to the second embodiment of the present invention.
[FIG. 13] FIG. 13 is a diagram illustrating another example of the degree of reduction in the drive power applied to the light emitting diodes a the liquid crystal display device according to the second embodiment of the present invention.
[FIG. 14] FIG. 14 is a diagram illustrating yet another example of the degree of reduction in the drive power applied to the light emitting diodes in the liquid crystal display device according to the second embodiment of the present invention. Description of the Invention

The first backlight according to the present invention is a backlight that is provided on the rear side of a display unit and projects illumination used for displaying images onto the display unit, said backlight comprising: multiple light emitting elements arranged in a single plane; a light source driving circuit having a light source control unit that defines the value of the drive power applied to each light emitting element and a light source driver unit that applies drive power corresponding to the value defined by the light source control unit to the light emitting elements; and at least one temperature sensor that detects the temperature of the regions where the light emitting elements that attain the highest temperatures during operation are disposed, wherein the light source control unit reduces the drive power applied to the light emitting elements that attain the highest temperatures during operation when the output values of the temperature sensors exceed a predetermined threshold value.

In this configuration, the temperature sensors detect the temperature of the regions in which the light emitting elements that attain the highest temperatures during operation and are liable to undergo degradation due to operation under elevated temperature conditions are disposed, thereby enabling the light source control unit of the light source driving circuit to reduce the drive power applied to the light emitting elements. As a result, the amount of heat emitted from the light emitting elements that attain the highest temperatures is reduced and temperature elevation in the light emitting elements themselves, as well as in the regions where the light emitting elements are disposed, can be minimized, thereby preventing the light emitting elements from operating at elevated temperatures for an extended period of time.

In the above-described configuration, it is preferable for the temperature sensors to be provided in the regions where the light emitting elements that attain the highest temperatures during operation are disposed. Doing so permits direct and reliable detection of the temperature of the regions where the light emitting elements that attain the highest temperatures during operation and are liable to undergo degradation due to operation under elevated temperature conditions are disposed.

In addition, the light source control unit preferably reduces the drive power applied to other light emitting elements surrounding the light emitting elements that attain the highest temperatures during operation at a rate that is lower than the rate of reduction used for the light emitting elements that attain the highest temperatures during operation. Doing so makes it possible to distribute the decrease in the luminous intensity produced by the reduction in the drive power applied to the light emitting elements not in a localized, but in a smooth manner, thereby permitting a reduction in the effects of non-uniformities in the intensity of the illumination emitted from the backlight on images displayed on the display device.

The second backlight according to the present invention is a backlight that is provided on the rear side of a display unit and projects illumination used for displaying images onto the display unit, said backlight comprising: multiple light emitting elements arranged in a single plane; a light source driving circuit having a light source control unit that defines the value of the drive power applied to each light emitting element and a light source driver unit that applies drive power corresponding to the value defined by the light source control unit to the light emitting elements; and temperature sensors that detect the temperature of multiple locations in the regions where the light emitting elements are disposed, wherein the light source control unit uniformly reduces the drive power applied to all the light emitting elements in accordance with the number of the temperature sensors that measure temperatures exceeding a predetermined temperature threshold value.

In this configuration, even when the maximum temperature value and its location cannot be identified because the way the temperature of the backlight increases changes depending on the operating conditions and the environment of the backlight, the temperature status of the backlight as a whole can be established and a determination can be made as to whether the elevation of temperature has reached a temperature that causes degradation of the light emitting elements and other circuit components. In addition, a uniform reduction in the drive power applied to all the light emitting elements makes it possible to minimize the elevation of temperature in the backlight as a whole without producing non-uniformities in the intensity of the illumination emitted from the backlight.

In this configuration, when the number of the temperature sensors that measure temperatures exceeding a predetermined temperature threshold value exceeds a predetermined number threshold value, the light source control unit preferably reduces the drive power applied to the light emitting elements at a constant rate whenever there is an increase in the number of the temperature sensors that measure temperatures exceeding the predetermined temperature threshold value. Doing so makes it possible to effectively minimize further elevation of temperature in the backlight depending on the degree of temperature elevation in the backlight while ensuring the brightness of the illumination emitted from the backlight.

Furthermore, preferably, when the number of the temperature sensors measuring temperatures exceeding the predetermined temperature threshold value exceeds a first number threshold value, the light source control unit reduces the drive power applied to the light emitting elements at a first reduction rate whenever there is an increase in the number of the temperature sensors measuring temperatures exceeding the predetermined temperature threshold value, and when the number of the temperature sensors measuring temperatures exceeding the predetermined temperature threshold value exceeds a second number threshold value, the light source control unit reduces the drive power applied to the light emitting elements at a second reduction rate whenever there is an increase in the number of the temperature sensors measuring temperatures exceeding the predetermined temperature threshold value.

Doing so makes it possible to reliably minimize the elevation of temperature in the backlight as a whole by increasing the rate of reduction in the drive power applied to the light emitting elements when the number of high-temperature locations in the backlight increases and makes abrupt temperature elevation in the backlight as a whole more likely to happen.

Moreover, when the number of the temperature sensors measuring temperatures exceeding the predetermined temperature threshold value exceeds the predetermined number threshold value, the light source control unit preferably reduces the drive power applied to the light emitting elements at a reduction rate that is gradually ramped up whenever there is an increase in the number of the temperature sensors measuring temperatures exceeding the predetermined temperature threshold value. Doing so makes it possible to effectively minimize temperature elevation in the backlight because the drive power applied to the light emitting elements is reduced at an increasingly higher rate as the elevation of temperature in the backlight as a whole progresses.

It should be noted that the light emitting elements of the present invention are preferably light emitting diodes.

Furthermore, using the various preferred embodiments of the inventive backlight described above as a backlight in display devices equipped with a display unit makes it possible to obtain display devices, in which light emitting elements and circuit components are prevented from undergoing degradation due to excessive temperature elevation.

A number of preferred embodiments of the inventive backlight and display devices that utilize it are described below with reference to drawings. It should be noted that while a liquid crystal display device used in a TV set equipped with a transmissive liquid crystal panel as a display unit is used below as an illustration of devices utilizing the inventive backlight, this description does not limit the range of devices, to which the present invention can be applied. For example, transreflective liquid crystal display elements can be used as the display unit of the inventive display device. In addition, the applications of the inventive display device are not limited to its use as liquid crystal display devices in TV sets and it can be adapted to a wide range of uses including computer monitors and information display monitors at train stations, art museums, and other public facilities.

### [Embodiment 1]

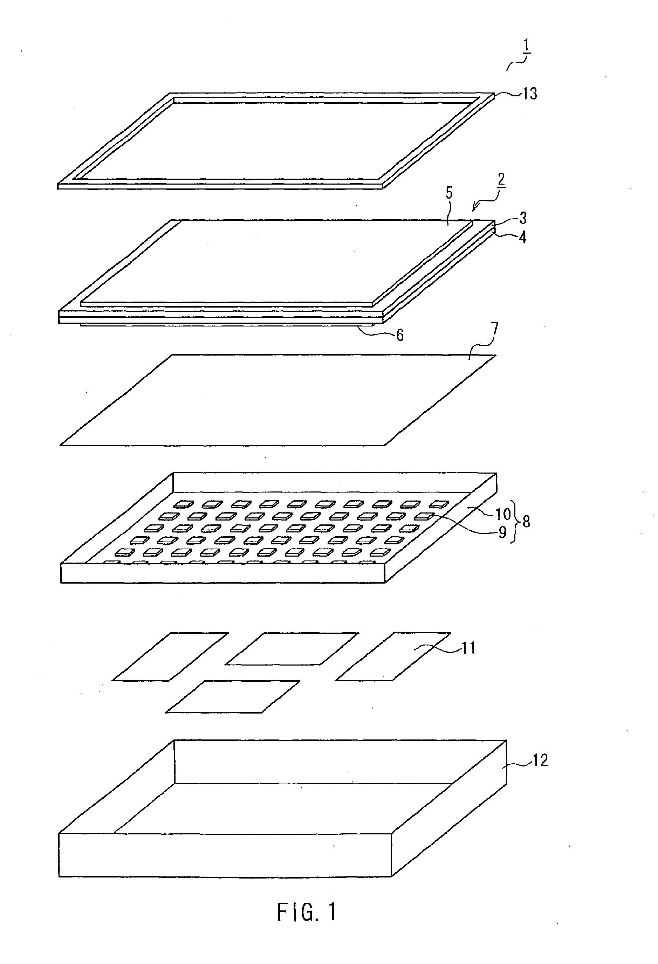

FIG. 1 is an exploded oblique view that schematically illustrates the configuration of a display device according to an embodiment of the present invention. As shown in FIG. 1, the liquid crystal display device 1 according to the present embodiment has a liquid crystal panel 2 that serves as a display unit; a backlight 8 that emits light necessary for displaying images on this liquid crystal panel 2; an optical sheet 7 that improves the uniformity of illumination by diffusing and collecting the illumination emitted from the backlight 8; circuit boards 11 arranged on the rear face of the backlight 8; a rear cover 12 that has incorporated therein the above-mentioned components, from the liquid crystal panel 2 to the circuit boards 11; and a bezel 13 that is arranged on the front face of the liquid crystal panel 2 and serves as a front cover.

The liquid crystal panel 2 is a transmissive display element that displays images by controlling the amount of light transmitted through pixels. As long as the panel is capable of displaying multi-level half tone images, there are no restrictions as to the type of the panel, which may be either a passive-matrix type panel or an active-matrix type panel utilizing switching elements such as TFrs. In addition, panels of various systems employing different liquid crystal display modes and drive field application directions can also be used.

Although detailed descriptions with reference to drawings are not provided here, it should be noted that the liquid crystal panel 2 of the present embodiment includes a liquid crystal layer, not shown, a pair of transparent substrates 3, 4 that sandwich the liquid crystal layer, and a pair of polarizing plates 5, 6 provided on the respective outside surfaces of the transparent substrates 3, 4. In addition, the liquid crystal panel 2 is provided with a driver circuit used to drive the liquid crystal panel 2. The driver circuit is connected to circuit boards 11 that carry drive circuits used for driving the entire liquid crystal device 1.

The liquid crystal panel 2 of this embodiment can be, for example, an active matrix type liquid crystal panel adapted for driving the liquid crystal layer on a pixel-by-pixel basis by supplying a scan signal and a data signal to scan lines and data lines arranged in a matrix-like fashion. In other words, when switching elements (TFTs) provided in the vicinity of the intersections between the scan lines and data lines is turned ON by a signal obtained from the scan lines, the arrangement of the liquid crystal molecules is changed depending on the potential level of the data signal, i.e. the grayscale signal, which is written to the pixel electrodes from the data lines, thereby producing a grayscale display corresponding to the data signal. In other words, in the liquid crystal panel 2, the state of polarization of light emitted from the backlight 8 through the polarizing plate 6 is modified by the liquid crystal layer and the amount of light passing through the polarizing plate 5 and exiting on the observer's side is controlled such that the desired image is displayed.

The optical sheet 7 is disposed, if necessary, between the liquid crystal panel 2 and the backlight 8. One or multiple diffuser plates, prismatic sheets or other optical members can be used such that the illumination emitted from the backlight 8 is projected as a uniform planar light flux across the entire rear face of the liquid crystal panel 2. It should be noted that in the case of an active backlighting scheme, in which the intensity and color of the illumination emitted from the backlight is controlled separately in each individual fractional area obtained by dividing the image display area of the liquid crystal panel in accordance with the images displayed on the liquid crystal panel, the optical sheet 7 is selected with a view to ensure the uniformity of the illumination in the fractional areas produced by division.

The backlight 8 includes multiple light emitting diodes 9, i.e. light emitting elements, which are arranged on the bottom face of a metal chassis 10 shaped as a blind-bottomed frame.

Despite the fact that the light emitting diodes 9, i.e. the light sources, are imparted a planar, substantially square shape in FIG. 1, the shape of the light emitting diodes 9 in this embodiment is not limited to the above. In addition, in the liquid crystal display device 1, which is used in a TV set, etc., the light emitting diodes 9 typically have three colors, i.e. red (R), green (G), and blue (B). The backlight 8, which serves as a source of white light, is obtained by compositing light emitted by the light emitting diodes 9 of the above-mentioned three colors. Various combinations can be used, such as when each one of the three colors, i.e. R, G, and B, is used on an individual basis as a monochromatic light emitting diode 9 in order to form a light source that can be recognized as a single white light source, or when the respective diodes are used in pairs, and furthermore, when, for example, R and B are used on an individual basis in combination with two G diodes. Quite naturally, there are cases, in which light emitting diodes 9 emitting white illumination are used on an individual basis, cases, in which white light sources are formed by combining monochromatic light emitting diodes 9, and cases, in which non-white illumination is employed in special-purpose display devices. The combinations of light emitting diodes used as light sources in the backlight of the present embodiment can assume any of the above described forms.

Furthermore, as schematically shown in FIG. 1, multiple light emitting diodes 9 are disposed in the longitudinal and transverse directions on the flat bottom face of the chassis 10. The number of the light emitting diodes 9 is determined appropriately based on the required brightness of the backlight 8 as well as on how precisely the color and intensity of the illumination in the projection plane of the liquid crystal panel 2 needs to be controlled. For example, 40-inch television receivers etc. use from several hundred to several thousand light emitting diodes 9.

It should be noted that when light emitting diodes 9 are employed as the light emitting elements, an LED substrate carrying the light emitting diodes 9 and some of the circuits that drive them is disposed on the bottom face of the chassis 10. The LED substrate, however, is not shown in FIG. 1.

Multiple circuit boards 11 are disposed on the rear side of the chassis 10 of the backlight 8. These circuit boards 11 carry circuits that drive and control the liquid crystal panel 2, circuits that drive and control the backlight 8, and, in addition, audio circuits and various signal processing circuits that are necessary for the liquid crystal display device 1 and power circuits used to drive them. It should be noted that, as described above, some of the drive circuits of the liquid crystal panel 2 are carried on the liquid crystal panel 2 and some of the drive circuits of the light emitting diodes 9, i.e. the light sources of the backlight 8, are carried on the LED substrate along with the light emitting diodes 9. In this case, the remaining circuits are carried on the circuit boards 11 disposed on the rear face of the chassis 10 of the backlight 8.

The rear cover 12 can be, for example, a plastic blind-bottomed frame that defines the outer shape of the liquid crystal display device 1, with various components, such as the liquid crystal panel 2 and the circuit boards 11, housed inside the frame. Furthermore, along with protecting the circuit boards 11 disposed on the rear face of the chassis 10 of the backlight 8, it serves as an insulator protecting the user from electric shock. The rear cover 12 is provided with vents used for introducing outside air in order to reduce the elevation of temperature inside the liquid crystal display device 1. Moreover, a power cord for connecting the device to a commercial power supply, an external terminal for inputting signals into the liquid crystal display device, and an antenna terminal, etc., are also provided. However, these components are omitted from FIG. 1.

The bezel 13 is a frame-shaped member which, along with improving the appearance of the device by covering the non-display area around the periphery of the liquid crystal panel 2, in which no images are displayed, is formed integrally with the rear cover 12 and serves as a front cover that defines the outer shape of the liquid crystal display device 1.

The cross-sectional structure of the liquid crystal display device 1 of the present embodiment will be explained next.

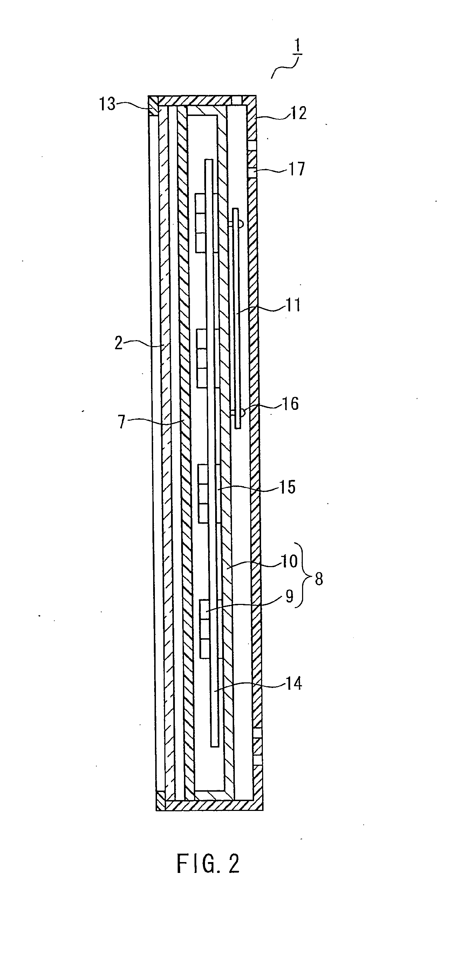

FIG. 2 is a schematic diagram illustrating the cross-sectional structure of the liquid crystal display device 1 used in this embodiment. In the liquid crystal display device 1, in the space formed by the bezel 13 serving as a front cover and the rear cover 12, a liquid crystal panel 2, an optical sheet 7, and a backlight 8, which has light emitting diodes 9 and chassis 10, are disposed successively, starting from the front side, i.e. the image viewing side on the left side of FIG. 2, to the rear side on the right side of FIG. 2.

Although this is not shown in FIG. 1, it should be noted that the light emitting diodes 9 are disposed on the LED substrate 14 in clusters of 3 diodes emitting each one of the colors, i.e. R, G, and B. The LED substrate 14 is secured to the bottom face of the chassis 10 using a fastening member 15. The fastening member 15 is heat conductive and acts to dissipate heat towards the rear cover 12 by conducting the heat of the light emitting diodes 9 to the chassis 10. Well-known heat-dissipating sheets can be used as the fastening member 15.

The circuit boards 11 are secured to the rear face of the chassis 10 using fastening screws 16 with a slight play, such that its electric insulation does not get damaged when the wiring pattern on its rear face comes into contact with the metal chassis 10.

In addition, vents 17 used for releasing heat accumulated inside the rear cover 12 are provided on the top and bottom side of the rear cover 12.

The circuit configuration of the liquid crystal display device 1 of the present embodiment will be explained next.

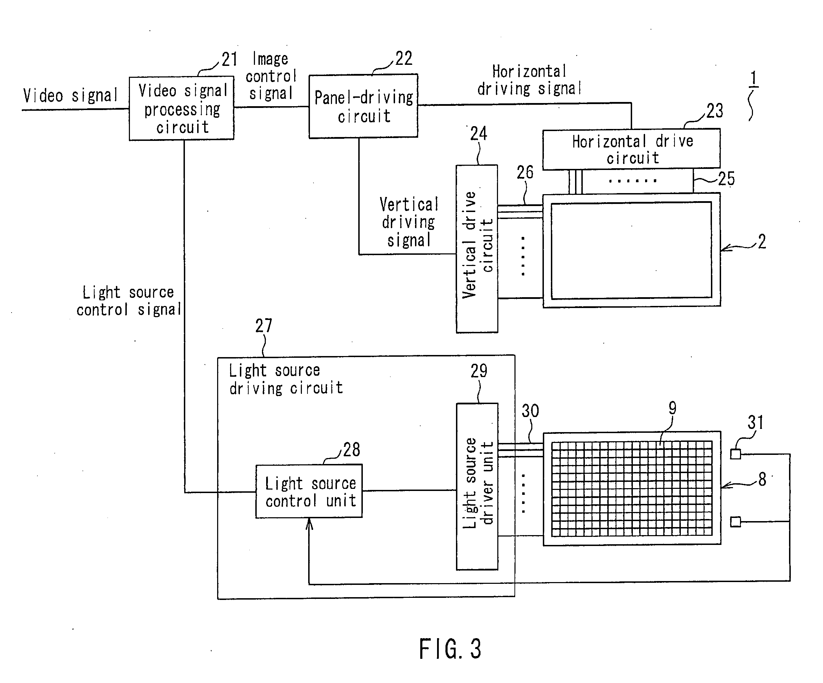

FIG. 3 is a schematic block diagram illustrating the image display-related circuit configuration of the liquid crystal display device 1 according to the present embodiment. It should be noted that the block diagram illustrated in FIG. 3, which is used as a simple conceptual description of the drive circuits and signal processing circuits, does not imply the presence of individual circuit boards and other hardware corresponding to each block shown in the block diagram.

As shown in FIG. 3, upon receipt of a video signal, an image control signal and a light source control signal are produced in the video signal processing circuit 21.

The image control signal is a signal that determines what grayscale level to assign to each pixel of the liquid crystal panel 2, i.e. the display unit. In other words, this is a signal that controls the transparency of each pixel. Provided as a video signal that defines the images to be displayed on the liquid crystal display device 1, this image control signal is usually made up of the respective grayscale level signals used for each of the three color subpixels, i.e. R, G, and B, that make up each pixel of the liquid crystal panel. It should be noted that when an active backlighting scheme is used, the grayscale level values required of each subpixel of the liquid crystal panel 2 are produced by subjecting the grayscale signal obtained from the video signal to the required adjustments depending on the color and intensity of the illumination projected from the backlight 8 at the subpixels.

The image control signal is inputted to the panel driving circuit 22 and is split into a horizontal driving signal and a vertical driving signal so as to allow for a single image to be displayed by scanning in the vertical direction and horizontal direction. The horizontal driving signal and vertical driving signal drive a horizontal drive circuit 23 and a vertical drive circuit 24, respectively. A display image is formed on the liquid crystal panel 2 when, for each scan line 26 successively selected by the vertical drive circuit 24, a grayscale signal used for image display is successively applied by the horizontal drive circuit 23 to each pixel via the data lines 25.

The light source control signal is a signal which, for each light emitting diode 9 disposed on the bottom face of the backlight 8, specifies the intensity of the illumination emitted from this particular light emitting diode 9 and causes it to emit the illumination at prescribed timing intervals. As described above, when an active backlighting scheme is used, the illumination emitted from each light emitting diode 9 of the backlight 8 is controlled in accordance with the images displayed on the liquid crystal panel 2. For example, in those portions where dark images are displayed, the illumination emitted from the backlight is dimmed. In addition, in those portions where monochromatic images are displayed, the illumination emitted from the backlight is adjusted to match the color of the displayed images. In addition to allowing the power consumption of the backlight to be reduced in comparison with backlights utilizing schemes, in which maximum luminous energy is continuously projected across the entire display area of the liquid crystal panel, doing so makes it possible to improve the contrast of the displayed images by eliminating the so-called "washed-out black" phenomena and display images of high color purity.

The light source control signal is inputted to the light source-driving circuit 27. The light source driving circuit 27 has a light source control unit 28 that defines the value of the drive power required to cause the multiple light emitting diodes 9 to emit light of a predetermined intensity based on the light source control signal, and a light source driver unit 29 that applies drive power corresponding to the value defined by the light source control unit 28 to the light emitting diodes 9 via the interconnect lines 30. It should be noted that the light emitting diodes 9, i.e. the light emitting elements used in the present embodiment, emit light at an intensity level corresponding to the drive current value, i.e. the value of the applied current. Furthermore, the effective intensity of the light emitting diodes 9 is regulated by controlling the ON/OFF ratio of the light emitting diodes 9 using PWM (Pulse Width Modulation) control. Accordingly, the peak value of the drive current applied to the light emitting diodes 9 and the duty (Duty) value used for PWM control are employed as values that indicate the magnitude of the drive power applied to the light emitting elements in the present embodiment. Thus, as used herein, the term "drive power" literally means the magnitude of the power applied to the light emitting elements to cause them to emit light at a predetermined brightness level. Furthermore, the terms "increasing" or "reducing the drive power" refer to increasing or reducing, respectively, the value of the applied current when current-driven light emitting elements are used, or the value of the voltage when voltage-driven light emitting elements are used, or furthermore, the duty value, i.e. the length of the time, during which the elements are lit, when PWM control is used.

In the liquid crystal display device 1 of the present embodiment, temperature sensors 31 are provided in the backlight 8 or in its vicinity. Electrical elements whose electrical properties change with temperature, such as thermistors, can be used as the temperature sensors 31. The temperature sensors 31 transmit the temperature of predetermined portions of the backlight 8 to the light source control unit 28 as output values. If the measured temperatures are high enough to cause degradation of the light emitting diodes 9 or other circuit elements, the light source control unit 28 minimizes the emission of heat by reducing the value of the drive power applied to the light emitting diodes 9 and thus keeps further temperature elevation in the backlight 8 under control.

The detection of the temperature of predetermined portions of the backlight, as well as the corresponding restrictions placed on the drive power applied to the light emitting elements in the liquid crystal display device 1 of the present embodiment will be explained next.

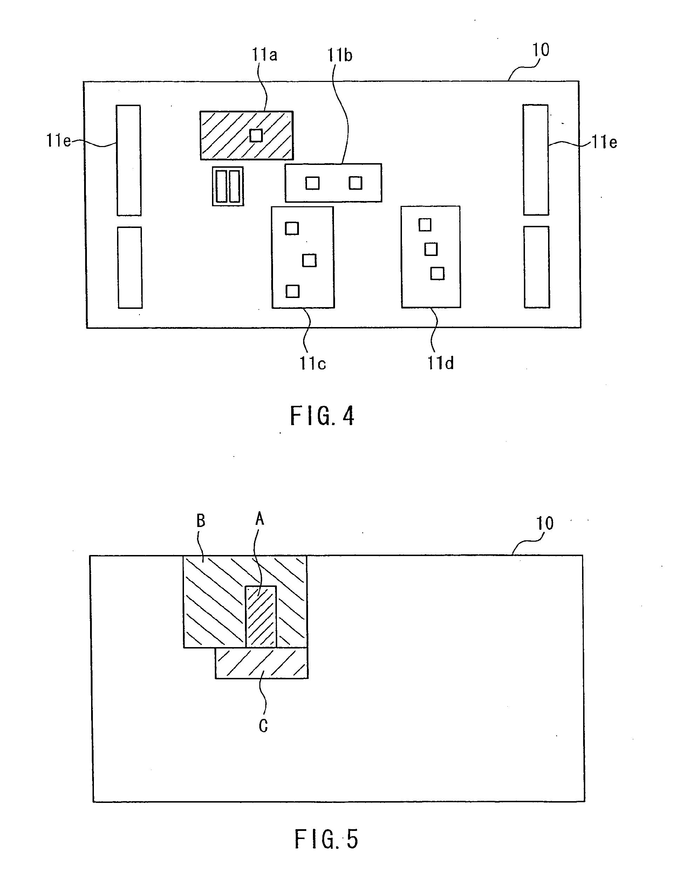

FIG. 4 is a plan view illustrating an exemplary arrangement of circuit boards 11 (11a-11e) on the rear face of the chassis 10 of the backlight 8 in the liquid crystal display device 1 of the present embodiment. It should be noted that FIG. 4 illustrates a state, in which the rear face of the chassis 10 is viewed from behind.

As shown in FIG. 4, the circuit boards 11 disposed on the rear face of the chassis 10 include a first circuit board 11a, a second circuit board 11b, a third circuit board 11c, and a fourth circuit board 11d, which are disposed in the central portion of the chassis 10, and, in addition, two fifth circuit boards 11e located along the right and left edges of the chassis 10. These circuit boards 11a-11e carry various circuits used to drive the liquid crystal display device 1 as described above. In addition, they are appropriately divided with account taken of the respective functionalities of each circuit and from the standpoint of circuit design, including the commonality of supply voltage values applied to the circuit elements. In the present embodiment, among these various circuit boards 11, the first circuit board 11a carries circuit elements used for signal processing at high voltages and a transformer used for transforming voltage values. For this reason, during operation of the liquid crystal display device, this first circuit board 11a attains a higher temperature than the rest of the circuit boards 11b-11e.

FIG. 5 shows an image of temperature distribution in the chassis 10. It should be noted that, for comparison with FIG. 4, FIG. 5 also shows the chassis 10 from behind.

When, as described above, the first circuit board 11a among the circuit boards 11 disposed on the rear face of the chassis 10 acts a heat generating source, as shown in FIG. 5, high-temperature regions A, B, and C are formed around the first circuit board 11a in the portion where the heat-generating first circuit board 11a is disposed. Here, in the region where the first circuit board 11a is disposed, the elevation of temperature in the portion comprising Region A, which is in the vicinity of the central portion of the first circuit board 11a, is more pronounced than the elevation of temperature in the portion comprising the surrounding regions B and C. As shown in the cross-sectional view of FIG. 2, due to the thin-profile design of the liquid crystal display device 1, the clearance between the rear face of the chassis 10 and the circuit board 11 is made extremely narrow, as a result of which air movement inside the rear cover 12 does not provide sufficient cooling effects and heat tends to stagnate in the center of the portion facing the first circuit board 11a of the chassis 10. Furthermore, in this example, temperature elevation in Region B is more pronounced than temperature elevation in Region C.

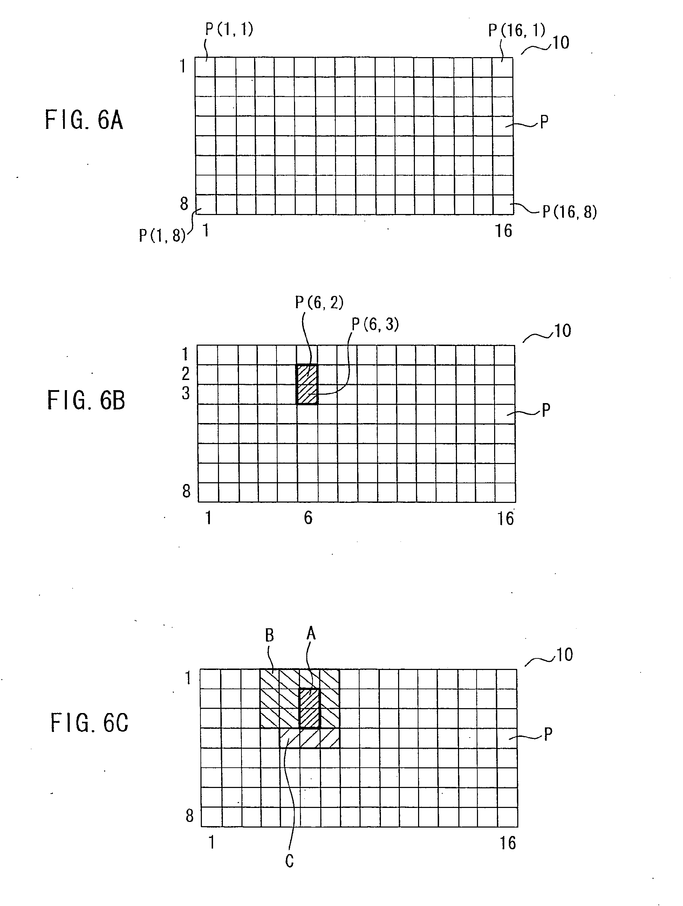

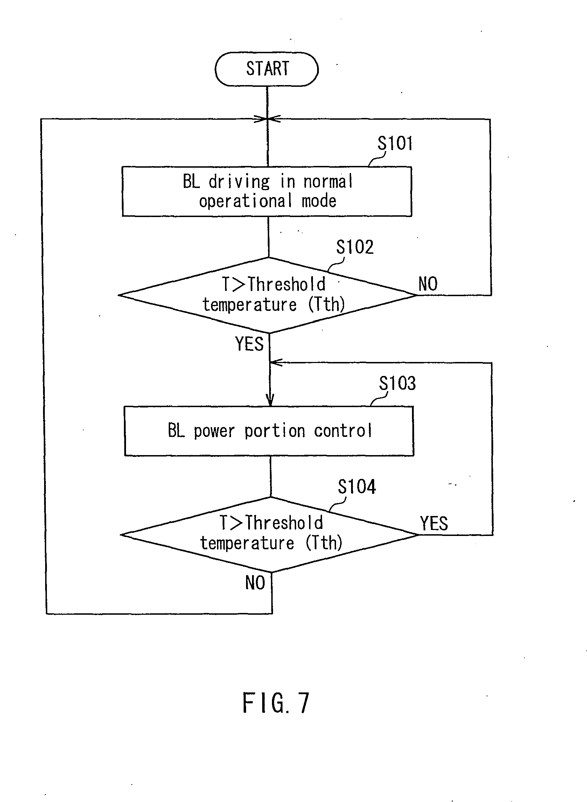

Next, FIG. 6 and FIG. 7 will be used to explain the operation of the light source control unit 28 of the light source driving circuit 27 reducing the drive power applied to the light emitting diodes 9, i.e. the light emitting elements, based on the temperature measurements acquired by the temperature sensors 31. FIG. 6 illustrates the arrangement of the light emitting diodes 9 and temperature sensors 31 on the chassis 10 in the backlight 8. In addition, FIG. 7 is a flow chart illustrating the process flow involved in the operation of reducing the value of the drive power applied to the light emitting diodes 9 in response to temperature measurements acquired by the temperature sensors 31.

In the present embodiment, as shown in FIG. 6 (a), the region where the light emitting diodes 9 are disposed on the chassis 10 of the backlight 8 is divided into unit regions P, with 8 unit regions provided in the vertical direction and 16 unit regions provided in the horizontal direction. As shown in FIG. 6 (a), the position of each unit region P is represented by coordinates P(x,y). A single light emitting diode 9 that can be considered a white light source is located in each of the unit regions P. It should be noted that there are no particular limitations concerning the specific placement or configuration of the light emitting diodes 9, i.e. it is possible to use only white-light light emitting diodes or combinations of R, G, and B light emitting diodes. In addition, multiple light emitting diodes 9 may be located in each unit region P. It should be noted that the chassis 10 of the backlight 8 in FIG. 6 is shown from behind for the sake of consistency in comparison with FIG. 4 and FIG. 5.

The way the circuit boards 11 are placed in the backlight device of the present embodiment confirms that the region of the chassis 10 where the light emitting elements that attain the highest temperatures during operation are disposed is Region A shown in FIG. 5. For this reason, in the present embodiment, the temperature sensors 31 are disposed at locations corresponding to Region A, i.e. in the unit regions P(6,2) and P(6,3) shown in FIG. 6 (b). It should be noted that the temperature sensors 31 of the present embodiment are thermistors, whose resistance value changes with temperature. The method employed here consists in detecting the value of the current that flows through the thermistors when a constant voltage is applied. However, the temperature sensors 31 are not limited to thermistors and it goes without saying that other temperature detecting means, such as thermocouples, can also be used. Although in the present embodiment the temperature sensors 31 are disposed at positions corresponding to Region A, in other words, in the two unit regions P(6,2) and P(6,3) shown in FIG. 6 (b), if it is desirable to keep the number of the temperature sensors to a minimum, a temperature sensor 31 may be placed only in one of these regions. Furthermore, conversely, if it is appropriate to increase the number of the temperature sensors, the temperature sensors 31 may be located in multiple unit regions including the unit regions P(6,2) and P(6,3). However, in any case, control over the drive power of the light emitting diodes 9 is exercised based on the results of temperature detection in the regions where the light emitting elements that attain the highest temperatures during operation are disposed.

Next, FIG. 7 is used to explain the process flow involved in the operation, whereby the light source control unit 28 keeps further elevation of temperature in the backlight 8 under control by reducing the value of the drive power applied to the light emitting diodes 9 of the backlight 8 using the temperature measurements of the temperature sensors 31.

First of all, in the initial Step S101, the backlight 8 is driven in the normal operational mode. As used herein, the phrase "driven in the normal operational mode" refers to a state, in which all the light emitting diodes 9 emit white light of a predetermined intensity. It should be noted that in the case of an active backlighting scheme, the phrase "driven in the normal operational mode" refers to a state, in which each light emitting diode 9 emits illumination of the color and intensity required in response to the video signal.

In the subsequent Step S102, it is determined whether the temperature measurements T detected by the thermistors, i.e. the temperature sensors 31, exceed a threshold temperature Tth used as a predetermined threshold value. It should be noted that when temperature sensors 31 are installed in both unit regions P(6,2) and P(6,3), the condition of S102 may be deemed satisfied when both temperature measurements obtained in these unit regions exceed the threshold temperature Tth; otherwise, the condition of S102 may be deemed satisfied if at least one of the two exceeds the threshold temperature Tth. Alternatively, the condition of S102 may be evaluated by comparing an average of the two temperature measurements with the threshold temperature Tth.

It should be noted that in the present embodiment the threshold temperature Tth is the upper limit value of the guaranteed operating temperature that ensures normal operation of the light emitting diodes 9. Operating the light emitting diodes 9 under elevated temperature conditions exceeding this guaranteed operating temperature leads to undesirable effects, such as progressive degradation of the light emitting diodes 9 themselves, as well as shortening of the service life of the elements.

It should be noted that although in the present embodiment the threshold temperature Tth, i.e. the threshold value of temperature measurements, is set to the upper limit value of the guaranteed operating temperature of the light emitting diodes 9, the threshold temperature Tth should be set appropriately in accordance with the design of specific mechanisms and circuits of the backlight used in the liquid crystal display device 1. For example, if the guaranteed operating temperature of the circuit elements located on the circuit boards 11 disposed on the rear face of the chassis 10 and circuit elements carried on the LED substrate 14 along with the light emitting diodes 9 is lower than the guaranteed operating temperature of the light emitting diodes 9 and preference must be given to protecting these circuit elements, the threshold temperature can be set simply as the guaranteed operating temperature of the circuit elements, for which temperature elevation can create problems. In addition, if the light emitting diodes 9 and thermistors, i.e. temperature sensors 31, cannot be disposed in close proximity and, as a result, a constant temperature resistance is present between the two and the temperatures detected by the temperature sensors 31 do not correspond to the actual ambient temperatures of the light emitting diodes 9, a value that takes this temperature resistance into consideration is preferably set as the threshold temperature Tth.

If in Step S102 the temperature measurements T are lower than the threshold temperature Tth (if NO), the routine goes back to Step S101 and the light emitting diodes 9 continue to be operated using normal operational drive power applied thereto "as is".

If in Step S102 the temperature measurements T are higher than the threshold temperature Tth set as the threshold value (if YES), then in Step S103 the light source control unit 28 reduces the drive power applied to the light emitting diodes 9, i.e. the light emitting elements of the backlight 8. The present embodiment makes it possible to assess the distribution of temperature in the chassis 10, where the heat sources reside in the circuit boards 11 disposed on its rear face, and, for this reason, makes it possible to identify the light emitting diodes 9, whose applied drive power will have to be reduced. First of all, the drive power is reduced in the light emitting diodes 9 disposed in the unit regions P(6,2) and P(6,3) shown in FIG. 6(c), i.e. in the light emitting elements that attain the highest temperatures during operation. This prevents excessive temperature elevation in the light emitting diodes 9 disposed in the unit regions P(6,2) and P(6,3) and makes it possible to prevent the degradation of these light emitting diodes 9 and the surrounding circuit components.

Moreover, in the present embodiment, the drive power applied to the light emitting diodes 9 corresponding to regions B and C in FIG. 5 is reduced simultaneously with the drive power applied to the light emitting diodes 9 corresponding to RegionA of FIG. 5. Specifically, as shown in FIG. 6 (c), the system reduces the drive power of the light emitting diodes 9 of the unit regions P(4,1), P(5,1), P(6,1), P(7,1), P(4,2), P(5,2), P(7,2), P(4,3), P(5,3), and P(7,3), which correspond to Region B. In addition, the drive power of the light emitting diodes 9 of the unit regions P(5,4), P(6,4), and P(7,4), which correspond to Region C, is also reduced. However, in this case, it is preferable for the degree of reduction in the drive power of the unit regions corresponding to the respective regions A-C to be changed in a staged manner depending on the degree of temperature elevation in each region. For example, when the drive power of the light emitting diode 9 corresponding to Region A is set to 40% of its normal operational power, the drive power of the light emitting diode 9 corresponding to Region B is set to 60% of its normal operational power, and that of Region C it is set to 75% of its normal operational power. It should be noted that the specific numerical values shown here are merely illustrative and it is preferable for the degree of reduction in drive power to be set in accordance with the distribution and degree of temperature elevation of the high-temperature regions. Thus, if the degree of drive power reduction is changed in a staged manner, the reduction in the intensity of illumination of the light emitting diodes 9 induced by the reduction in drive power becomes smoother in plane view. This alleviates non-uniformities in the intensity of the illumination emitted from the backlight 8.

Furthermore, the methods used for reducing the value of the drive power applied to the light emitting diodes 9 by x% relative to the drive power applied thereto in the normal operational mode include a method, in which the peak value of the drive current applied to the light emitting diodes 9 is set to x% of the normal operational state, and a method, in which the duty value used to control the light emitting diodes 9 based on PWM control is set to x% of the normal operational state. In addition, the value of the drive power applied to the light emitting diodes can be reduced using a method, in which both the peak value of the drive current applied to the light emitting diodes 9 and the PWM control duty value are controlled simultaneously.

It should be noted that, as shown in FIG. 6 (c), the normal operational drive power (100%) is applied "as is" to the light emitting diodes 9 located in the unit regions without hatching outside Regions A-C.

Next, as shown in Step S104 of FIG. 7, the light source control unit 28 performs another comparison between the temperature measurements T acquired by the temperature sensors 31 and the threshold temperature Tth set as a predetermined threshold value. If the temperature measurements T are not higher than the threshold temperature Tth (if NO), the routine goes back to Step S101 and the normal operational power is applied to all the light emitting diodes 9. In addition, if the temperature measurements T are still higher than the threshold temperature Tth, the routine continues performing the operation of drive power reduction of Step S103.

It should be noted that when the operation of drive power reduction of Step S103 is carried out, the applied drive power can be reduced little by little by repeating the reduction operation using small decrements, and not by reducing the drive power applied to the light emitting diodes 9 to the predetermined degree of reduction at once. For example, if in Step S102 the temperature measurements T are determined to be higher than the threshold temperature Tth, then, first of all, the drive power is reduced by 10% in Region A, by 5% in Region B, and by 3% in Region C, as illustrated in FIG. 6 (c). Then, if in Step S104 it is determined that the temperature measurements T continue to be higher than the threshold temperature Tth, another round of stepped power reduction is carried out. As a result, the decrease in the intensity of illumination produced when the drive power applied to the light emitting diodes 9 is reduced is made smoother in time, and this can make it less noticeable to an observer who views images displayed on the liquid crystal display device.

It should be noted that the degree of reduction is set appropriately depending on the highest temperature values, and the frequencies, with which the detected temperature measurements T exceed the threshold temperature Tth, as well as on the temperature resistance of the elements that need be protected from the effects of elevated temperatures, such as the light emitting diodes and other circuit components. Furthermore, in the same manner as when drive power is reduced, when drive power returns to its normal operational state upon confirmation of a decrease in the temperature measurements T, the value of the drive power applied to the light emitting diodes can be increased in a stepped manner, without having to change it back to 100% of the normal operational level at once.

As described above, reducing the drive current applied to the light emitting diodes 9 that attain the highest temperatures during operation, which are located in a region of highly elevated temperatures in the chassis 10, makes it possible to lower the peak value of temperature elevation in the chassis 10 and effectively prevent degradation due to the heat emitted by the light emitting diodes 9. Moreover, since variation in the distribution of temperature within the chassis 10 can be reduced, variation in the brightness and color of the illumination emitted from the backlight 8, which is due to the temperature versus intensity characteristic of the light emitting diodes, can also be reduced.

Next, a second example showing how drive power applied to the light emitting diodes is reduced in the liquid crystal display device of the present embodiment will be described using a device, in which two circuit boards 11 among the circuit boards 11 (11a-11e) disposed on the rear face of the chassis 10 act as heat sources.

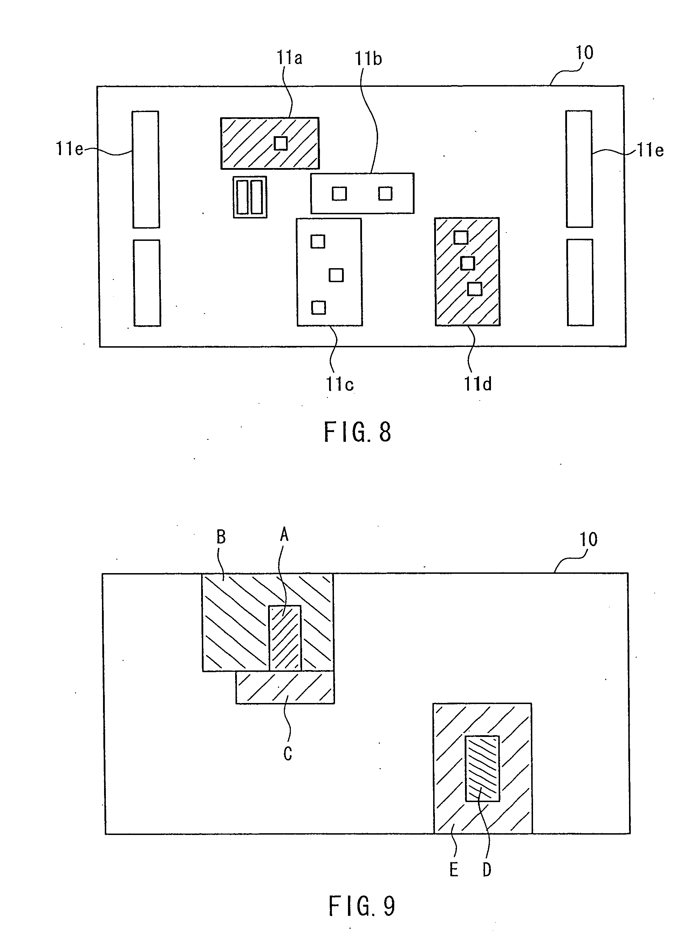

FIG. 8, which is illustrates the circuit boards 11 on the rear face of the chassis 10 in a second example of the liquid crystal display device of the present embodiment, corresponds to FIG. 4 used in the above-described first example. The second example illustrated in FIG. 8 shows a case, in which the fourth circuit board 11d acts as a heat source in addition to the first circuit board 11a. It should be noted that it is assumed that no heat generating sources amounting to major heat sources are present in any of the circuit boards other than the first circuit board 11a and fourth circuit board 11d, that is, in the second circuit board 11b, third circuit board 11c, and fifth circuit board 11e.

The degree of temperature elevation in the chassis 10 that occurs when the circuit boards 11 are disposed as shown in FIG. 8 is illustrated in FIG. 9. FIG. 9 corresponds to FIG. 5 in the above-described first example. As shown in FIG. 9, in the second example, temperature is increased on the regions A-C, i.e. in the portion corresponding to the region where the first circuit board 11a is disposed. At the same time, temperature is also increased in the regions D and E, i.e. in the portion corresponding to the region where the fourth circuit board 11d is disposed. It should be noted that in the second example of the present embodiment, the degree of temperature elevation in the regions A-E can be described by the following relationship: Region A > Region D > Region B > Region C = Region E.

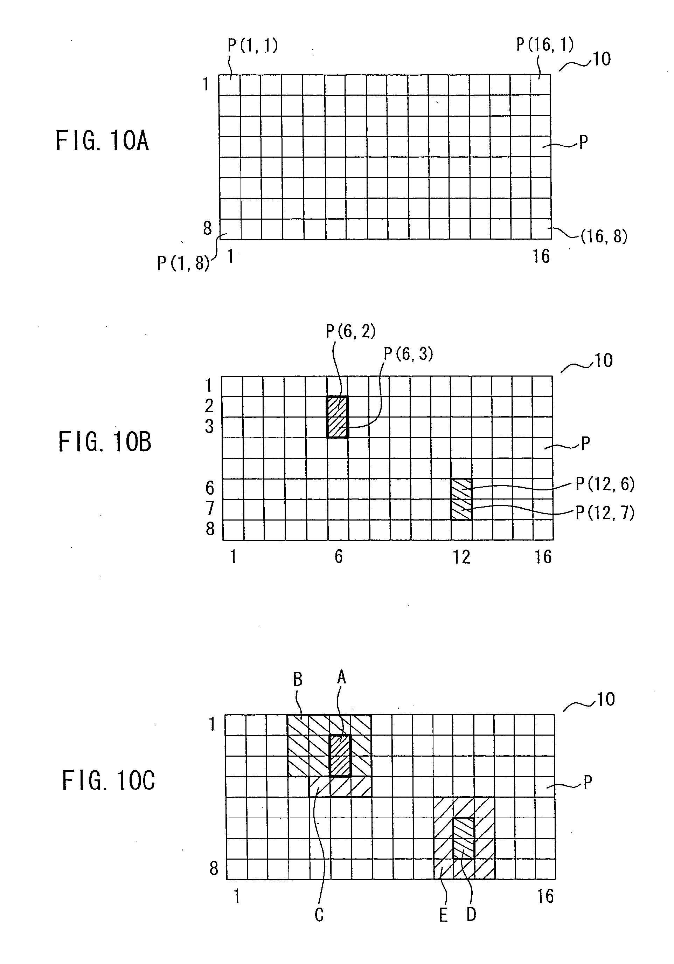

In the second example of the liquid crystal display device of the present embodiment, the light source control unit 28 of the light source-driving circuit 27 reduces the drive power applied to the light emitting diodes 9 located in Regions A-E illustrated in FIG. 9. In the same manner as FIG. 6 in the above-described first example, FIG. 10 illustrates the arrangement of the light emitting diodes 9 on the chassis 10, the placement location of the temperature sensors 31, and in addition, the positions of the light emitting diodes 9 whose drive power is reduced.

As shown in FIG. 9, in the second example of the present embodiment, the way the circuit boards 11 are disposed makes it possible to confirm regions of highly elevated temperatures in the chassis 10 and identify the positions of the light emitting elements that attain the highest temperatures during operation. The temperature sensors 31 are placed in the regions where the light emitting diodes that attain the highest temperatures during operation are disposed. In the second example of the present embodiment, as described above, the highest temperature elevation occurs in Region A of FIG. 9, which is why the temperature sensors 31 are disposed in the unit regions P(6,2) and P(6,3) corresponding to Region A of FIG. 9. It should be noted that in the present embodiment there are two circuit boards 11 acting as heat sources and because the temperature elevation that occurs in the portion shown as Region D in FIG. 9 is second-highest after Region A, the temperature sensors 31 may be disposed in the unit regions P(12,6) and P(12,7), which correspond to Region D. The temperature sensors 31 used in the second example are also thermistors.

In the same manner as in the above-described first example, in the second example, as described in the flow chart illustrated in FIG. 7, the light source control unit 28 reduces the drive power applied to the light emitting diodes 9 disposed in the regions of highly elevated temperatures. Here, control over the drive power applied to the unit regions corresponding to the regions A-E is exercised in the same manner as in the first example. In addition, in the second example, an elevation of temperature that turns a circuit board into a heat source occurs in regions D and E. Accordingly, the drive power applied to the light emitting diodes 9 that correspond to the regions D and E is also reduced. In the second example, the drive power is reduced depending on the degree of temperature elevation in each region, e.g. in Region A it is set to 40%, in Region D to 50%, in Region B to 60%, and in Regions C and E to 75% of its normal operational power. Doing so makes it possible to achieve a smoother temperature distribution within the chassis 10 because the drive power applied to the light emitting diodes 9 is reduced depending on the rate of temperature elevation in each region. As shown in FIG. 10 (c), the normal operational drive power (100%) is applied "as is" to the light emitting diodes 9 located in the unit regions of the portion that has no hatching outside Regions A-E.

It should be noted that while drive power control in all RegionsA-E can be exercised based on the detection results of the temperature sensors 31 disposed in at least one of the unit regions P(6,2) and P(6,3), which correspond to RegionA, it is also possible to control Regions A-C and Regions D and E separately. Namely, when the temperature sensors 31 are disposed in the unit regions P(12,6) and P(12,7) corresponding to Region D, as described above, control over the drive power applied to Regions A-C is exercised using the temperature sensors 31 disposed in unit regions P(6,2) and P(6,3) and control over the drive power applied to Regions D and E is exercised using the temperature sensors 31 disposed in unit regions P(12,6) and P(12,7).

In the same manner as in the first example, there are two methods for reducing the drive power applied to the light emitting diodes 9, i.e. one can either lower the peak value of the drive current applied to the light emitting diodes 9 or reduce the duty value of the light emitting diodes 9 used for PWM control.

Furthermore, in the same manner as in the above-described first example, in the second example, as shown in the flowchart of FIG.7, comparison is made between the threshold temperature Tth and temperature measurements T acquired by the temperature sensors 31 and a determination is made as to whether the routine should go back to the normal operational mode or keep applying reduced drive power to the light emitting diodes 9. It should be noted that, in the same manner as in the first example, drive power reduction and restoration can be carried out in a staged, gradual manner.

As described above in the second example of the present embodiment, extreme temperature elevation in the backlight can be minimized using the method for reducing the drive power applied to the light emitting diodes described in the present embodiment even when there are two circuit boards acting as heat generating sources. Accordingly, since degradation due to temperature elevation in the light emitting diodes, circuit components, and other elements can be prevented and distribution of temperature in the chassis can be made smoother, it can be appreciated that the variation of intensity and color of the illumination emitted from the backlight can be reduced.

Naturally, it goes without saying that, based on the approach illustrated in the second example, the same techniques can be used to apply the present invention to cases, in which there are three or more circuit boards acting as heat sources.

In addition, in the second example of the present embodiment, the explanations referred to a situation, in which the drive power applied to the light emitting diodes located in the two regions of highly elevated temperatures was reduced simultaneously However, due to the fact that the temperature sensors are provided in each region in the second example of the present embodiment, the adjustment of the drive power applied to the light emitting elements located in each region can be carried out on an individual basis.

The present embodiment, as described above, includes a first example, in which a single circuit board acts as a heat source, and a second example, in which two circuit boards act as heat sources. In both cases, temperature sensors are used to detect the temperature of the regions where the light emitting elements that attain the highest temperatures during operation are disposed, and, when the detected temperature measurements exceed a predetermined temperature threshold value, the temperature of the light emitting elements that attain the highest temperatures during operation is decreased by reducing the drive power applied to the light emitting elements that attain the highest temperatures during operation.

It should be noted that the above-described embodiment was described using an example, in which the temperature sensors used to detect the temperature of the regions of the light emitting elements that attained the highest temperature during operation were provided directly in the regions where the light emitting elements subject to temperature detection were disposed. Doing so allows for precise temperature corrections to be made because it permits measurement of actual temperatures in the regions where the light emitting elements that attain the highest temperatures during operation are disposed. However, when the distribution of temperature in the backlight during actual operation is known, such as when the circuit boards acting as heat sources are known, as they are in the present embodiment, disposing the temperature sensors in the region subject to detection is not an essential prerequisite. For example, when no space is available for disposing the temperature sensors in the vicinity of the light emitting elements, the temperature sensors can be disposed in the peripheral region of the backlight chassis and the necessary temperature measurements can be obtained using temperature sensors disposed outside of the region of interest by establishing, in advance, the relationship between the temperature at the locations of placement of the temperature sensors and the temperature of the regions where the light emitting elements that attain the highest temperatures during operation are disposed.

In addition, several temperature sensors may be disposed in predetermined portions of the backlight and, based on temperature measurements acquired by these temperature sensors, the light source control unit may be configured to identify the light emitting elements that attain the highest temperatures during operation and the temperature of the regions where they are disposed.

Furthermore, if the temperature sensors are not thermistors and, for example, the sensors used are thermocouples or other sensors capable of measuring temperature directly, the temperature of the components that need to be protected from degradation caused by temperature elevation does not have to be obtained indirectly from the temperature of the regions where they are disposed. For this reason, in such cases, the temperature of the regions of the light emitting elements that attain the highest temperatures during operation in the present invention also includes the temperature of the light emitting elements themselves.

Additionally, while the first and second examples of the above-based embodiment described cases, in which the light emitting elements subject to drive power reduction included not only the light emitting elements that attained the highest temperature during operation and drive power applied to the surrounding light emitting elements was also reduced at the same time, the present invention is not limited such cases. For example, it goes without saying that when the effects of temperature elevation due to the circuit boards and other heat sources occur in a very limited narrow region, it is sufficient to reduce the drive power applied to the light emitting elements that attain the highest temperatures during operation. In particular, when the degree of reduction in the drive power is relatively low, the rate of decrease in the intensity of the light emitting elements due to the reduction in the applied drive power is accordingly smaller and, therefore, there is no need to smooth the distribution of intensity by reducing the drive power applied to other light emitting elements located around the light emitting elements that attain the highest temperatures, and, therefore, it is believed that it is sufficient to reduce the drive current applied to only one of the light emitting elements.

### [Embodiment 2]

Next, explanations will be provided with respect to a second embodiment of the inventive liquid crystal display device, which is a display device equipped with a backlight capable of preventing light emitting elements and other circuit components from undergoing degradation due to operation under elevated temperature conditions when the circuit boards acting as heat sources are not identified or when the way the temperature of the chassis 10 of the backlight 8 increases varies depending on the actual conditions of use.

It should be noted that while a liquid crystal display device is used as an example to describe the display device in the present embodiment, the basic configuration of the display device, with the exception of the placement of the temperature sensors in the backlight and the way the light source control unit of the light source-driving circuit operates based on the temperature measurements detected by the temperature sensors, is identical to that of the liquid crystal display device described in FIGS. 1-3 in the first embodiment described above. For this reason, in the present embodiment, explanations regarding the specific configuration of the liquid crystal display device are omitted and explanations are provided only with respect to the reduction of the drive power applied to the light emitting diodes, i.e. the light emitting elements.

In the liquid crystal display device of the present embodiment, temperature sensors 31 that detect the ambient temperature in the regions where each light emitting diode 9 is disposed are arranged so as to cover each light emitting diode 9, i.e. each light emitting element forming part of the backlight 8. In addition, the light source control unit 28 of the light source-driving circuit 27 makes a determination as to whether temperature measurements detected by the temperature sensors 31, which detect the ambient temperatures of the regions where each light emitting diode 9 is disposed, exceed a predetermined temperature threshold value and reduces the drive power applied to all the light emitting diodes 9 depending on the number of the temperature sensors 31, whose temperatures exceed the predetermined temperature threshold value.

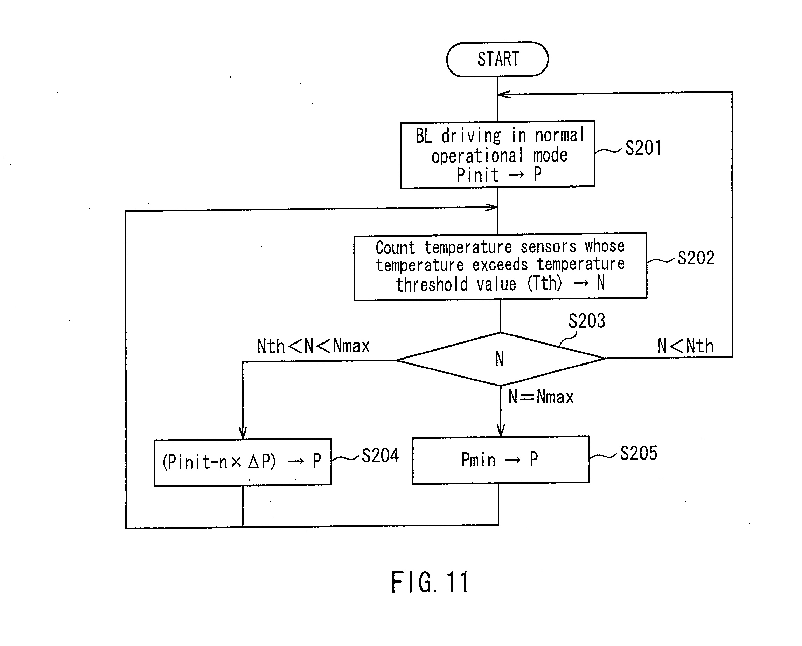

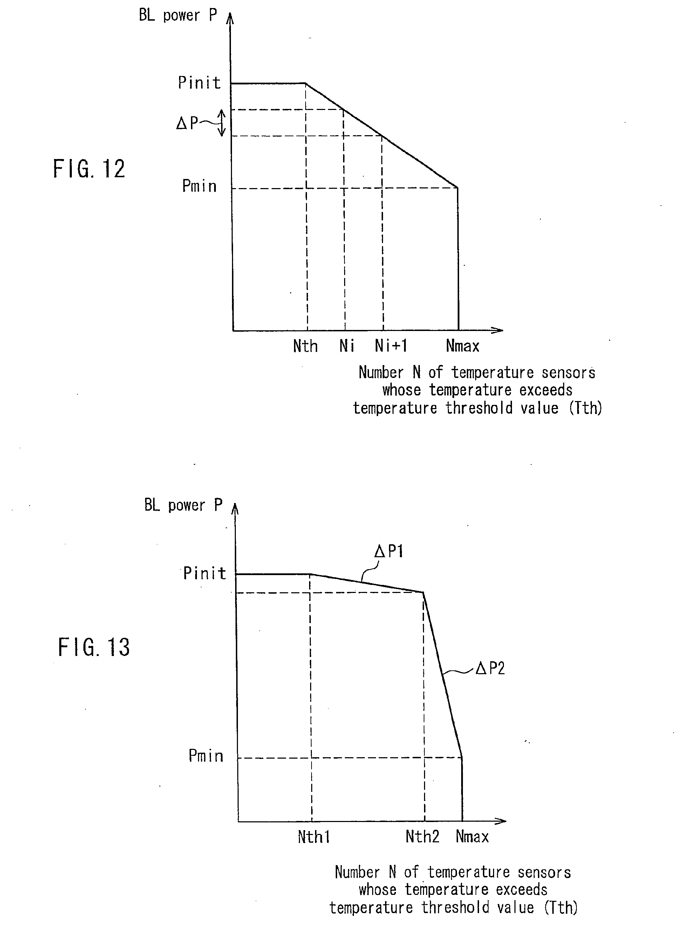

FIG. 11 is a flow chart illustrating the process flow involved in the operation of reducing the drive power applied to the light emitting diodes 9 in the liquid crystal display device of the present embodiment. In addition, FIG. 12 illustrates the relationship between the number of the temperature sensors 31, whose temperature exceeds the predetermined temperature threshold value, and the magnitude of the drive power applied to each light emitting diode 9. It should be noted that despite the fact that thermistors are used as the temperature sensors 31 in the present embodiment in the same manner as in the first embodiment, the sensors are not limited to thermistors.

As shown in FIG. 11, the drive power P applied to all the light emitting diodes 9 in Step S201 is drive power Pᵢₙₜ, which is required for driving the device in the normal operational state. As used herein, the term "normal operational state" refers to a state, in which each light emitting diode 9 emits light at the desired luminous intensity. In the case of an active backlighting scheme, this is a state, in which the emitted light has the luminous intensity required of each light emitting diode 9 in accordance with the images being displayed.

Next, in Step S202, the light source control unit 28 acquires the ambient temperatures T of the regions where each light emitting diode 9 is disposed. Furthermore, it makes a determination as to whether the ambient temperatures T exceed a predetermined temperature threshold value Tth and counts the number N of the temperature sensors 31, whose temperatures exceed the predetermined temperature threshold value Tth. As used herein, the phrase "predetermined temperature threshold value Tth" corresponds to the threshold temperature described in the first embodiment above and can be set to the upper limit value of the guaranteed operating temperature of the light emitting diodes 9. In addition, in the same manner as in the above-described first embodiment, in the present embodiment, the temperature threshold value Tth is a numerical value that is set appropriately depending on the individual conditions of the backlight 8, including the construction of the backlight 8 and the number of the circuit components that need to be protected from degradation caused by operation at elevated temperatures.

Next, in Step S203, the light source control unit 28 compares the a predetermined number threshold value Nth with the number of the temperature sensors 31 whose output values, i.e. the values of the ambient temperatures in the regions subject to measurement, exceed the predetermined temperature threshold value Tth. After that, if the number of the temperature sensors 31, for which the value of the ambient temperature in the region of measurement exceeds the predetermined temperature threshold value Tth, is smaller than the predetermined number threshold value Nth (if N<Nth), the routine proceeds to Step S201 without making adjustments to the drive power applied to the light emitting diodes 9. At such time, as shown in FIG. 12, the value of the drive power applied to the light emitting diodes 9 is still equal to the drive power Pint required for driving the device in the normal operational state.

If in Step S203 the number of the temperature sensors 31, whose output values exceed the predetermined temperature threshold value Tth, is greater than the predetermined number threshold value Nth, in Step S204 the light source control unit 28 uniformly reduces the drive power applied to all the light emitting diodes 9. As shown in FIG. 12, at such time, depending on the number of the temperature sensors 31 exceeding the threshold value Nth, the amount of reduction is increased by ΔP whenever the difference between N and Nth is incremented by one.

Furthermore, if the temperatures detected by all the temperature sensors 31 exceed the predetermined temperature threshold value Tth (if N=Nmax) in Step S203, in Step S205, the light source control unit 28 reduces the value of the drive power applied to all the light emitting diodes 9 to a minimum value, Pmin. It should be noted that Pmin is preferably set as the value of drive power, at which the ambient temperatures T in the regions where the light emitting diodes 9 are disposed do not exceed the threshold temperature, i.e. the predetermined threshold value.

In the same manner as in the first embodiment, doing so allows the light emitting diodes 9, i.e. the light emitting elements, to be effectively prevented from being exposed to threshold temperature conditions exceeding the predetermined temperature even if the locations of the heat sources that cause temperature elevation within the plane of the chassis 10 of the backlight 8 are not known and, in particular, in the case of an active backlighting scheme, even if the "light-on" status of the light emitting diodes 9 is constantly changing or the heat emission status of the circuit boards 11 disposed on the rear face of the chassis 10 is not constant.

Furthermore, in the present embodiment, the drive power applied to all the light emitting diodes 9 is uniformly reduced by the light source control unit 28. As a result, there are no non-uniformities in the intensity and color of the illumination in the various parts of the backlight 8 and the images being displayed are not given an unnatural appearance.

It should be noted that in the present embodiment the output values of the temperature sensors 31 are managed by the light source control unit 28 of the light source-driving circuit 27 and control over the relationship between the number N of the temperature sensors 31 whose temperature exceeds the predetermined temperature threshold value Tth and the drive power P applied to the light emitting diodes 9 is exercised so as to maintain the relationship illustrated in FIG. 12. For this reason, when the number of the temperature sensors 31 whose temperature exceeds the predetermined temperature threshold value Tth decreases, the value of the drive power applied to the light emitting diodes 9 is increased. Accordingly, the light emitting diodes 9 and other circuit components that need to be protected can avoid the danger of degradation due to long-term exposure to elevated temperatures and the light emitting diodes 9 can be driven in a state that is closer to the normal operational state at all times.

As described above, the liquid crystal display device of the present embodiment was described with reference to a case, in which the value of the drive power applied to each light emitting diode 9 was reduced using a decrement of ΔP in response to the number of the temperature sensors whose temperature exceeded the temperature threshold value Tth whenever the number N of the temperature sensors 31 whose temperature exceeded the predetermined temperature threshold value Tth exceeded the predetermined number threshold value Nth. However, the determination of the degree of reduction in the drive power applied to the light emitting diodes 9 in the present embodiment is not limited to the above method, and, for example, the degree of reduction can be varied by setting several number threshold values and changing the degree of reduction in response to these numbers.

FIG. 13 illustrates the relationship between the number N of the temperature sensors whose temperature exceeds the predetermined temperature threshold value Tth and the drive power P applied to the light emitting diodes when there is a first number threshold value Nth1 and a second number threshold value Nth2 and the light source control unit 28 changes the degree of reduction in the value of the drive power applied to the light emitting diodes 9 when each one of the threshold values is exceeded.

As shown in FIG. 13, when the number N of the temperature sensors 31 whose temperature exceeds the temperature threshold value Tth is greater than a first number threshold value Nth1, the drive power P applied to each light emitting diode 9 is decreased using a first decrement ΔP1; moreover, when the number N of the temperature sensors 31 whose temperature exceeds the temperature threshold value Tth is greater than a second number threshold value Nth2, the drive power applied to each respective light emitting diode 9 is decreased using a second decrement ΔP2, which is larger than the first decrement ΔP1. In this manner, when the number N of the temperature sensors 31 whose temperature exceeds the temperature threshold value Tth is relatively small, the decrement ΔP of the drive power applied to the light emitting diodes 9 according to the number N of the temperature sensors 31 is made smaller, and when the number N of the temperature sensors 31 whose temperature exceeds the temperature threshold value Tth increases, the decrement ΔP of the drive power applied to the light emitting diodes 9 in response to the number N of the temperature sensors 31 is increased, thereby making it possible to effectively minimize further elevation of temperature when numerous temperature sensors 31 detect temperatures in excess of the predetermined temperature threshold value. As a result, it is possible to reliably prevent thermal runaway-like states, in which the ambient temperature in the backlight 8 abruptly increases due to the synergistic effects of the heat emissions from each light emitting diode 9.

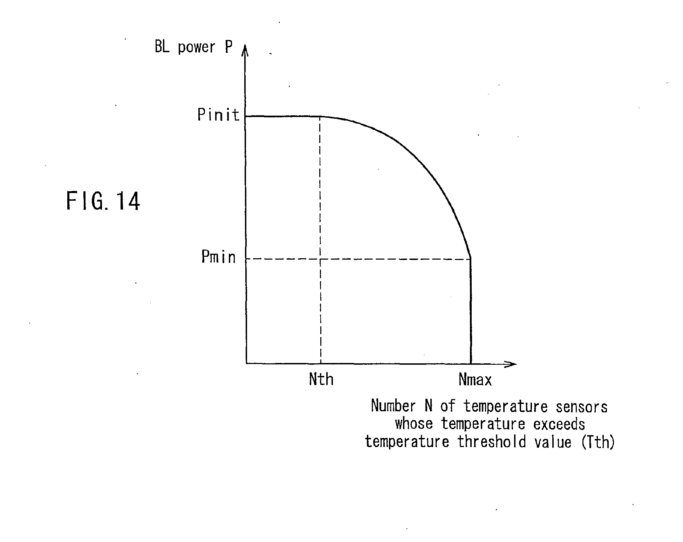

Furthermore, as shown in FIG. 14, instead of setting up several number threshold values Nth, the slope of ΔP can be continuously increased with the increase in the number N of the temperature sensors 31 whose temperature exceeds the temperature threshold value Tth.

As described above, in the liquid crystal display device according to the second embodiment of the present invention, elements such as light emitting elements and other circuit components can be prevented from being exposed to harsh environments due to excessive temperature elevation and adverse effects such as the shortening of the service life of the elements can be prevented even when the heat sources responsible for the elevation of temperature inside the backlight cannot be identified. It goes without saying that, in the same manner as the temperature threshold value Tth, the number threshold values Nth, Nth1, and Nth2 should be set appropriately depending on the specific conditions of the circuit elements that need to be protected and the configuration of the backlight of the liquid crystal display device.

In addition, the present embodiment has been explained using an example, in which the temperature sensors are placed so as to cover the regions where each light emitting diode, i.e. each light emitting element, is disposed. The sensors are placed in the vicinity of the locations, at which the light emitting diodes were disposed, and their number matches the number of the light emitting diodes. However, the present embodiment is not limited to the above described approach. It is sufficient to set the number of the provided temperature sensors appropriately depending on the configuration of the backlight. For example, multiple light emitting diodes can be considered as a single cluster and such a cluster can be managed as a single light emitting diode placement region. The ambient temperature of each region can then be acquired using a single temperature sensor. In particular, when groups of R, G, and B light emitting diodes are used as white light sources, there is no point in providing temperature sensors for the individual light emitting diodes of different colors and it is preferable to provide a temperature sensor for each unit that constitutes a single white light source.

It should be noted that although light emitting diodes are used as light emitting elements in each embodiment of the present invention described above, the present invention is not limited thereto and can utilize EL sources and other light emitting elements as light sources.

### Industrial Applicability

The present invention can prevent light emitting elements and other circuit components from undergoing degradation due to elevated ambient temperatures in the chassis portion of the backlight during actual use and it can be put to industrial use in backlights that can be used in a stable manner over extended periods of time, as well as in display devices utilizing such backlights.

## Claims

1. A backlight that is provided on the rear side of a display unit and projects illumination used for displaying images onto the display unit,
the backlight comprising:
a plurality of light emitting elements arranged in a single plane;
a light source driving circuit having a light source control unit that defines the value of the drive power applied to each light emitting element and a light source driver unit that applies drive power corresponding to the value defined by the light source control unit to the light emitting elements; and
at least one temperature sensor that detects the temperature of the regions where the light emitting elements that attain the highest temperatures during operation are disposed,
wherein the light source control unit reduces the drive power applied to the light emitting elements that attain the highest temperatures during operation when the output value of the temperature sensor exceeds a predetermined threshold value.

2. The backlight according to claim 1, wherein the temperature sensor is provided in the region where the light emitting elements that attain the highest temperatures during operation are disposed.

3. The backlight according to claims 1 or 2, wherein the light source control unit reduces the drive power applied to other light emitting elements surrounding the light emitting elements that attain the highest temperatures during operation at a rate that is lower than the rate of reduction used for the light emitting elements that attain the highest temperatures during operation.

4. A backlight that is provided on the rear side of a display unit and projects illumination used for displaying images onto the display unit,
the backlight comprising:
a plurality of light emitting elements arranged in a single plane;
a light source driving circuit having a light source control unit that defines the value of the drive power applied to each light emitting element and a light source driver unit that applies drive power corresponding to the value defined by the light source control unit to the light emitting elements; and
temperature sensors that detect the temperature of a plurality of locations in the regions where the light emitting elements are disposed,
wherein the light source control unit uniformly reduces the drive power applied to all the light emitting elements in accordance with the number of the temperature sensors measuring temperatures that exceed a predetermined temperature threshold value.

5. The backlight according to claim 4, wherein
when the number of the temperature sensors that measure temperatures exceeding the predetermined temperature threshold value is greater than a predetermined number threshold value, the light source control unit reduces the drive power applied to the light emitting elements at a constant rate whenever there is an increase in the number of the temperature sensors that measure temperatures exceeding the predetermined temperature threshold value.

6. The backlight according to claim 4, wherein
when the number of the temperature sensors measuring temperatures exceeding the predetermined temperature threshold value exceeds a first number threshold value, the light source control unit reduces the drive power applied to the light emitting elements at a first reduction rate whenever there is an increase in the number of the temperature sensors measuring temperatures exceeding the predetermined temperature threshold value, and, when the number of the temperature sensors measuring temperatures exceeding the predetermined temperature threshold value exceeds a second number threshold value, the light source control unit reduces the drive power applied to the light emitting elements at a second reduction rate that is greater than the first reduction rate whenever there is an increase in the number of the temperature sensors measuring temperatures exceeding the predetermined temperature threshold value.

7. The backlight according to claim 4, wherein
when the number of the temperature sensors that measure temperatures exceeding the predetermined temperature threshold value is greater than the predetermined number threshold value, the light source control unit reduces the drive power applied to the light emitting elements at a reduction rate that is gradually ramped up whenever there is an increase in the number of the temperature sensors measuring temperatures exceeding the predetermined temperature threshold value.

8. The backlight according to any one of claims 1 to 7, wherein the light emitting elements are light emitting diodes.

9. A display device comprising a display unit,
wherein light from a backlight according to any one of claims 1 to 8 is projected onto the display unit.
